# FASCICULE DE BREVET EUROPEEN

(11) **EP 0 891 687 B1**
(45) Date de publication et mention de la délivrance du brevet: **07.11.2001**
(21) Numéro de dépôt: 98440149.7
(22) Date de dépôt: 03.07.1998
(51) Int. Cl.: A01B 33/14

(54) **Outil amovible pour machine de travail du sol**
Lösbares Gerät für Bodenbearbeitungsmaschine
Detachable tool for soil working machine

(30) Priorité: 18.07.1997 FR 9709321
(43) Date de publication de la demande: 20.01.1999
(73) Titulaire: KUHN S.A., 67700 Saverne (FR)
(72) Inventeur: Kirch, Michel, 67260 Keskastel (FR)

(56) Documents cités:
- EP-A- 0 211 276
- EP-A- 0 407 726
- FR-A- 2 122 445
- GB-A- 2 106 762
- US-A- 1 746 092

## Description

La présente invention se rapporte au domaine technique des machines agricoles destinées par exemple à travailler le sol. Ce domaine technique englobe tout type d'appareil comportant des éléments d'usure, susceptibles d'être remplacés plus ou moins régulièrement.

L'invention concerne plus particulièrement des outils de travail destinés à être montés sur une herse rotative. Avec de tels outils, il est souhaitable d'obtenir une fixation de préférence rapide à mettre en oeuvre et efficace du point de vue de la tenue dans le temps.

Il est déjà connu de réaliser des outils pour une machine de travail du sol comportant
- une partie active de travail,
- une partie de liaison pour positionner ledit outil sur la machine,
   et
- au moins une ouverture destinée à coopérer avec un moyen de maintien retenant ledit outil de travail sur la machine,

Ainsi le document **EP-A-0 211 276** décrit une herse rotative comportant des rotors porte-outils présentant une configuration spécifique. Cette dernière est obtenue à l'aide d'une plaque métallique rapportée et fixée par soudure sur la pièce principale du rotor porte-outils. La plaque métallique réalise avec la pièce principale du rotor porte-outils des logements pour y introduire une partie de liaison d'outils de travail. Chaque outil est en outre pourvu d'un perçage coïncidant avec une ouverture ménagée dans la pièce principale du rotor porte-outils et avec une ouverture ménagée dans la plaque métallique. Un moyen de maintien du type goujon est utilisé pour traverser les ouvertures et le perçage, et pour retenir l'outil de travail sur le rotor porte-outils.

La partie de liaison présente une forme sensiblement plane dans laquelle est ménagé le perçage.

Le montage rapide d'outils de travail sur un rotor porte-outils n'est souvent possible qu'avec un jeu mécanique adéquat. Ce dernier a tendance à augmenter avec le temps en raison de l'usure localisée des parties en contact des outils de travail et du rotor porte-outils. Les parties de liaison décrites dans le document mentionné ci-dessus, présentent une forme sensiblement parallélépipédique et les zones de contact avec le rotor porte-outils se réduisent le plus souvent à des arêtes ou à des coins.

L'utilisation d'outils de travail présentant une partie de liaison de ce type, et plus précisément une partie de liaison sous forme de languette sensiblement plane, présente l'inconvénient de réduire, lors du travail, les zones de contact entre ladite partie de liaison et son logement. En effet, la zone de contact se réduit donc souvent à une arête ou à des zones très localisées sur la partie de liaison. Ceci est accentué par les efforts importants subis par les outils lors du travail du sol. Il en résulte un certain nombre d'inconvénients et notamment une usure localisée et prématurée des pièces en contact, des efforts et contraintes très localisés entraînant une augmentation souvent importante du jeu mécanique entre l'outil et son support. La durée de vie ou la tenue dans le temps des outils de travail ou du rotor porte-outils risque donc d'être affectée de manière négative.

L'objet de la présente invention vise donc à s'affranchir de ces inconvénients et à réaliser des outils de travail permettant de faciliter leur remplacement sur une machine agricole et à réduire le temps nécessaire à cette opération.

Un autre objet de la présente invention vise à optimiser la forme des outils de travail et des rotors porte-outils de manière à simplifier leur assemblage tout en conservant une bonne tenue mécanique dans le temps de l'ensemble. Il s'agit donc de répartir de façon optimale les contraintes exercées sur les outils de travail et notamment sur les parties des outils utilisées pour la fixation ou la liaison sur le rotor porte-outils pour ne pas fragiliser à terme l'un ou l'autre de ces éléments.

Les objets et buts assignés à la présente invention sont atteints à l'aide d'un outil pour machine de travail du sol destiné à tourner autour d'un axe de rotation vertical (x - x') correspondant et comportant :
- une partie active de travail,
- une partie de liaison sensiblement orthogonale à la partie active de travail et destinée à positionner ledit outil sur la machine,
- au moins une ouverture ménagée dans la partie de liaison et destinée à coopérer avec un moyen de maintien retenant ledit outil de travail sur la machine,
- ladite partie de liaison comprenant une languette sensiblement plane et au moins un doigt, ce dernier étant, avec ladite languette, susceptible de s'engager dans au moins un logement prévu à cet effet sur la machine
caractérisé en ce qu'une section transversale de la partie de liaison, orthogonale à un axe longitudinal de la languette et passant par ladite languette et le (les) doigt(s), présente une première partie sensiblement rectangulaire et une (des) deuxième(s) partie(s) d'épaisseur accrue par rapport à la première partie et de forme au moins partiellement arrondie ou circulaire, ladite première partie formant ladite languette et ladite (lesdites) deuxième(s) partie(s) formant le (les) doigt(s).

D'autres particularités et avantages apparaîtront à la lecture de la description détaillée, figurant ci-après, se référant aux dessins annexés, donnés à titre d'exemples illustratifs mais non limitatifs dans lesquels :
- la figure 1 représente une vue globale d'une herse rotative comportant des outils de travail conformes à l'invention,
- la figure 2 représente une vue partiellement en coupe d'un exemple de montage d'outils de travail conformes à l'invention sur un rotor porte-outils d'une machine à l'aide d'un élément de liaison,
- la figure 3 représente une vue en perspective d'un autre mode de réalisation dudit élément de liaison,
- la figure 4 représente une vue de dessus, partiellement en coupe du montage de la figure 2,
- la figure 5 représente une vue similaire à la figure 4 d'un autre mode de réalisation du montage d'outils de travail sur un rotor porte-outils,
- la figure 6 représente une vue similaire à la figure 2 d'un mode supplémentaire de réalisation du montage d'outils de travail sur un rotor porte-outils,
- la figure 7 représente une vue en perspective de l'élément de liaison de la figure 6,
- la figure 8 représente une vue de face de l'outil de la figure 5,
- la figure 9 représente une vue latérale de l'outil de travail représenté aux figures 5 et 8,
- la figure 10 représente une vue de dessus de l'outil de travail représenté aux figures 5, 8 et 9,
- la figure 11 représente une vue de face d'un autre mode de réalisation de l'outil conforme à l'invention,
- la figure 12 représente une vue latérale de l'outil de la figure 11,
- la figure 13 représente une vue de dessus de l'outil montré aux figures 11 et 12.

Dans la suite de la description, il sera fait allusion à divers modes de réalisation de la machine conforme à l'invention. Ces modes de réalisation se rapportent souvent à une (des) pièce(s) ou à un (des) élément(s) isolé(s), les autres parties de la machine restant identiques d'un mode de réalisation à l'autre. Ainsi, lorsque l'on passe d'un mode de réalisation à un autre, ledit (lesdits) élément(s) ou ladite (lesdites) pièce(s) de la machine conforme(s) à l'invention porte(nt) la même dénomination et est (sont) affecté(s) d'une référence augmentée ou diminuée d'un chiffre multiple de 100. Les parties identiques dans les différents modes de réalisation conservent quant à elles les mêmes références.

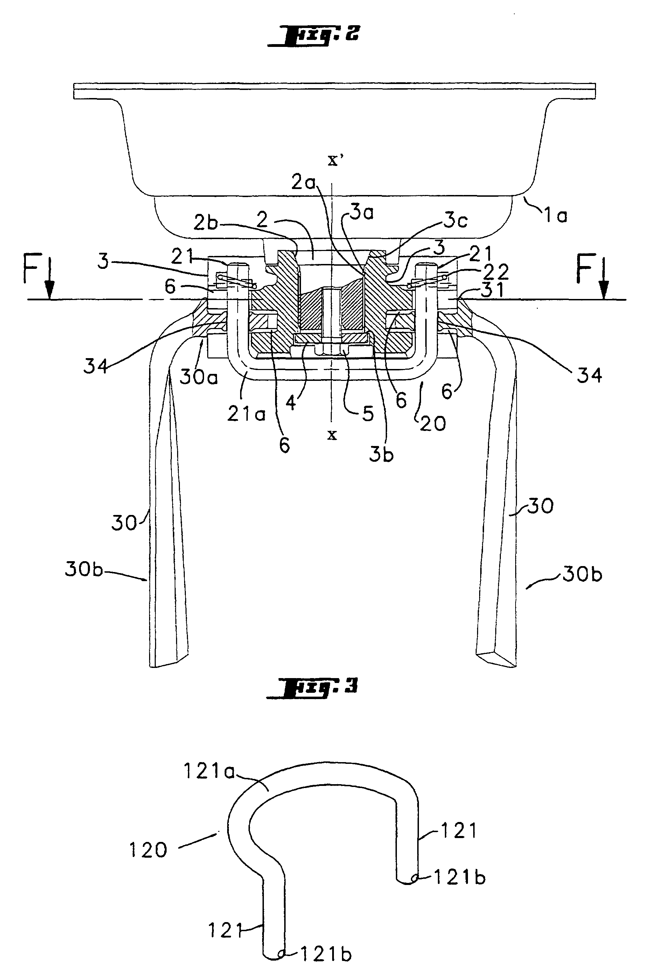

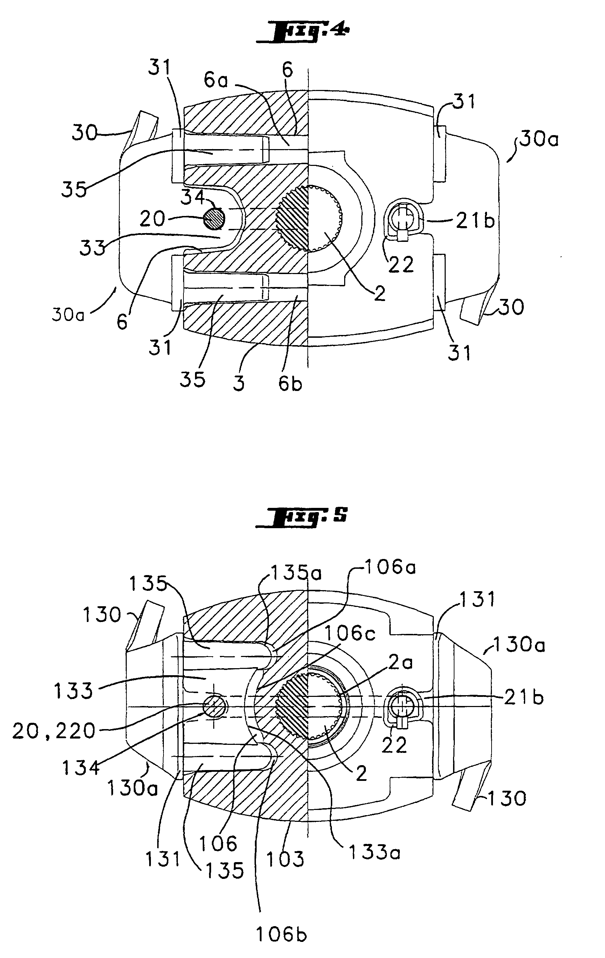

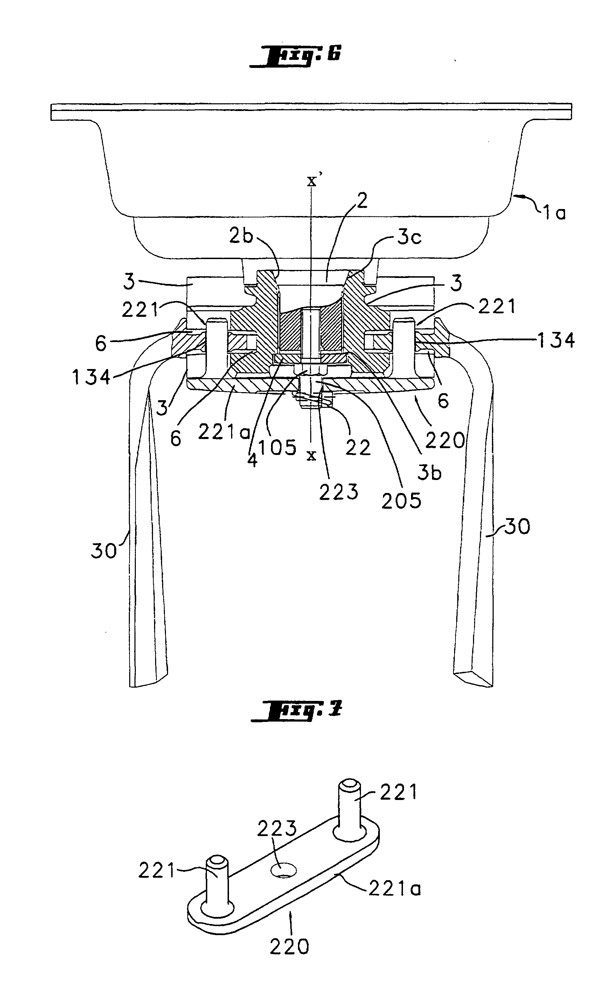

Les figures 4, 5 et 6 représentent chacune une vue, partiellement en coupe, d'un rotor porte-outils (3 ; 103) d'une herse rotative (1). Cette dernière est constituée d'un carter (1a) dans lequel sont agencés des organes d'entraînement non représentés aux figures mais connues de l'homme de l'art. Ces organes d'entraînement ont pour fonction de transmettre un mouvement de rotation par exemple d'une prise de force d'un tracteur vers des arbres (2), orientés chacun selon un axe (x - x') respectif sensiblement vertical durant le travail.

Chaque arbre (2) est destiné à entraîner en rotation un rotor porte-outils (3 ; 103) correspondant. Ce dernier est par exemple monté sur l'arbre (2) selon l'axe (x - x'). L'arbre (2) peut avantageusement être pourvu de cannelures (2a) sur sa périphérie de manière à obtenir une liaison d'entraînement avec des cannelures (3a) correspondantes du rotor porte-outils (3 ; 103). En outre, une vis (5 ; 105) vissée dans l'arbre (2), maintient axialement le rotor porte-outils (3 ; 103) sur l'arbre (2) entre une rondelle d'appui (4) et une partie conique (2b) de l'arbre (2).

Le rotor porte-outils (3 ; 103) présente alors un rebord (3b) contre lequel la rondelle d'appui (4) vient en butée, et une partie conique (3c) complémentaire de la partie conique (2b) de l'arbre (2). Le rotor porte-outils (3 ; 103) est également pourvu d'un logement (6 ; 106), destiné à positionner des outils de travail (30 ; 130). Le logement (6 ; 106) est réalisé dans ce mode de réalisation, notamment sous forme de deux trous oblongs (6a, 6b ; 106a, 106b) obtenus par moulage ou usinage ou tout autre moyen.

Les outils de travail (30 ; 130) sont constitués d'une partie de travail (30b ; 130b) et d'une partie de liaison (30a ; 130a). La partie de travail (30b ; 130b) et la partie de liaison (30a ; 130a) s'étendent, de préférence, selon des directions sensiblement perpendiculaires de manière à réaliser une forme globale coudée. La partie de liaison (30a ; 130a) est engagée dans le logement (6 ; 106) correspondant, lequel est ménagé, par tout moyen connu, dans le rotor porte-outils (3 ; 103). Le logement (6 ; 106) constitue ainsi un dégagement de matière s'étendant sensiblement orthogonalement à l'axe (x - x').

Le logement (6 ; 106) présente une forme complémentaire à la partie de liaison (30a ; 130a) de l'outil de travail (30 ; 130). Le logement (6 ; 106) est donc réalisé en un (plusieurs) dégagement(s) de matière sur le rotor porte-outils (3 ; 103) pour recevoir l'outil de travail (30 ; 130) présentant une forme sensiblement complémentaire audit (auxdits) dégagement(s). A chaque forme particulière d'un outil de travail (30 ; 130) et plus précisément de sa partie de liaison (30a ; 130a) correspond donc une forme (ou un dégagement) complémentaire ménagée dans le rotor porte-outils (3 ; 103). Les dimensions de la partie de liaison (30a ; 130a) et du logement (6 ; 106) sont avantageusement choisies pour assurer un jeu mécanique optimal de manière à favoriser un démontage rapide des outils de travail (30 ; 130) de leur support, en l'occurrence de leur rotor porte-outils (3 ; 103).

La machine conforme à l'invention comporte également des moyens de maintien pour maintenir les outils de travail (30 ; 130) sur leur rotor porte-outils (3 ; 103). Ces moyens de maintien comportent un élément de liaison (20 ; 120 ; 220) reliant entre eux au moins deux outils de travail (30 ; 130) d'un même rotor porte-outils (3 ; 103) pour empêcher une désolidarisation desdits outils de travail (30 130) de leur rotor porte-outils (3 ; 103).

Selon une réalisation avantageuse de l'invention, l'élément de liaison (20 ; 120 ; 220) présente une forme sensiblement en U, dont les extrémités forment des broches (21 ; 121 ; 221) qui s'engagent dans les outils de travail (30 ; 130) de manière à les retenir sur le rotor porte-outils (3 ; 103), et dont la partie médiane constitue un organe porteur (21a ; 121a ; 221a) supportant lesdites broches (21 ; 121; 221).

Avantageusement l'élément de liaison (20 ; 120 ; 220) est maintenu en position à l'aide d'un moyen de retenu (22). Ce dernier est constitué par exemple d'au moins une goupille automatique ou de tout autre moyen connu.

Selon les exemples de montage représentés aux figures, l'élément de liaison (20 ; 120 ; 220) permet de lier les outils de travail (30 ; 130) par paire sur chaque rotor porte-outils (3 ; 103). L'un des outils de travail (30 ; 130) peut donc être retenu ou maintenu en position sur le rotor porte-outils (3 ; 103) par au moins un autre outil de travail (30 ; 130).

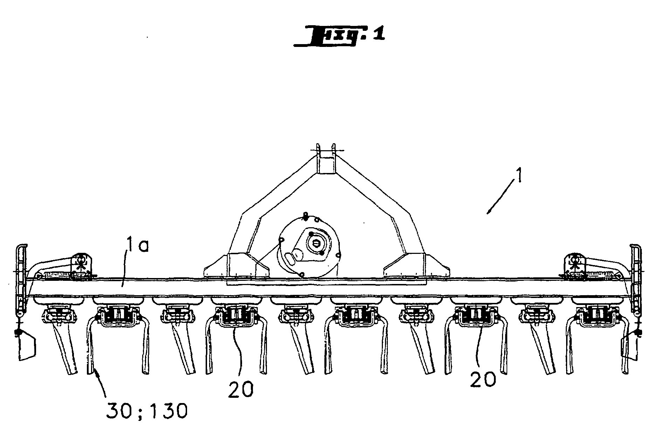

Les figures 2 et 3 représentent l'élément de liaison (20) sous forme de tige métallique.

Cette dernière est pourvue à l'extrémité d'au moins une broche (21 ; 121) d'un perçage (21b, 121b) pour le moyen de retenue (22). Ceci correspond à l'exemple de réalisation de la figure 1, où l'élément de liaison (20) est monté sur les outils de travail (30) et sur le rotor porte-outils (3) de bas en haut.

Il est intéressant de noter que la perte de l'un des moyens de retenue (22) n'a aucune incidence sur la sécurité d'utilisation de la machine conforme à l'invention. C'est effectivement l'autre goupille qui assurera toujours le maintien en position de l'élément de liaison (20 ; 120) et par conséquent des outils de travail (30 ; 130).

La séparation entre les outils de travail (30 ; 130) et le rotor porte-outils (3 ; 103) est ainsi évitée.

En revanche, l'exemple de réalisation de la figure 3, correspond à un élément de liaison (120) du type tige métallique dont la forme autorise un montage selon une direction différente.

L'organe porteur de cet élément de liaison (120) s'étend selon un arc de cercle de manière à se loger autour du rotor porte-outils (3 ; 103). Les extrémités formant les broches (121) sont orientées à 90° de la partie en arc de cercle de façon à pouvoir s'engager simultanément par le haut dans des ouvertures (34 ; 134) ménagées dans les outils de travail (30 ; 130). Cet élément de liaison (120) est également pourvu d'un perçage (121b) à l'extrémité de chacune de ses broches (121).

En partant de la partie réalisant un arc de cercle, il est possible d'adapter la longueur des broches (121) en fonction de la configuration des outils (30 ; 130) ou du rotor porte-outils (3 ; 103). Les broches (121) traversant les ouvertures (34 ; 134) peuvent éventuellement être dépourvues de moyen de retenue (22) et de perçage (121b) de par leur sens de montage allant du haut vers le bas.

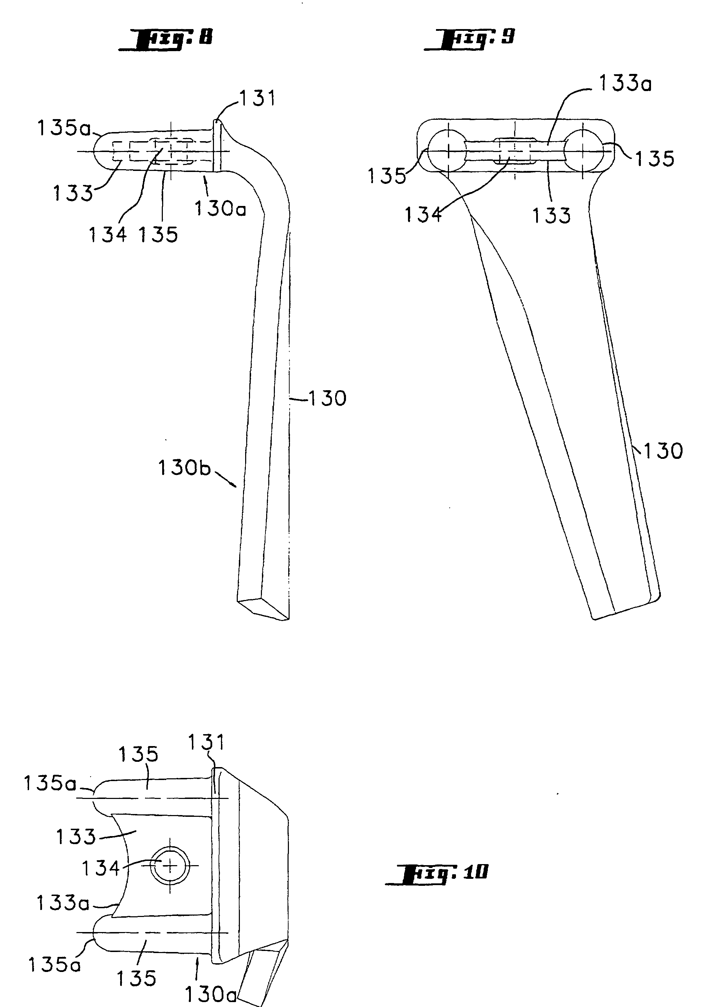

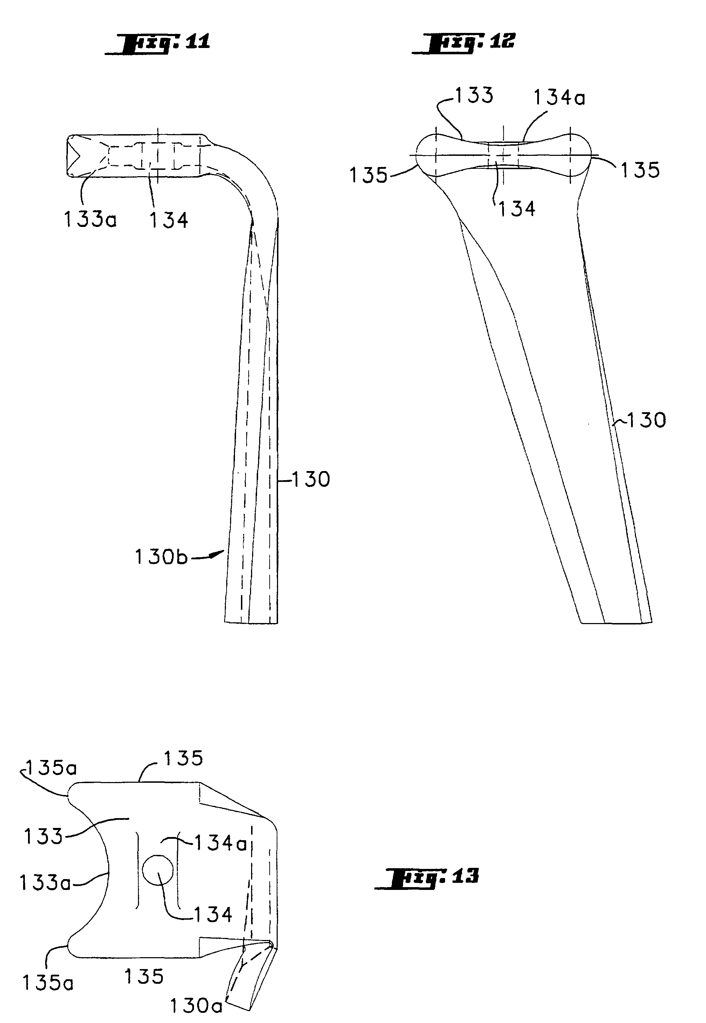

Selon un autre mode de réalisation supplémentaire de la machine conforme à l'invention représentée notamment aux figures 6 et 7, l'élément de liaison (220) comporte un organe porteur (221a) constitué d'une lame dont les extrémités portent chacune une broche (221) perpendiculaire au plan d'extension de ladite lame.

Avantageusement l'organe porteur (221) de l'élément de liaison (220) comporte aussi un passage (223) localisé entre les broches (221). La vis (105) comporte également une tête se terminant par un embout (205). Ce dernier est destiné à traverser le passage (223) lorsque l'élément de liaison (220) est monté sur les outils de travail (30 ; 130). Dans cette réalisation, le moyen de retenue (22) est monté sur l'embout (205) (figure 6) et permet de maintenir en position l'élément de liaison (220) et par conséquent les outils de travail (30 ; 130). Le moyen de retenue (22) peut également être monté sur le rotor porte-outils (3 ; 103) ou sur une pièce rendue solidaire dudit rotor porte-outils (3 ; 103) ou de l'arbre (2). Le montage de l'élément de liaison (220) se fait de bas en haut et les broches (221) présentent une longueur suffisante pour traverser les ouvertures (34 ; 134) des outils de travail (30 ; 130).

Dans l'exemple de réalisation de la figure 4, la partie de liaison (30a) présente une languette centrale (33) ainsi qu'un doigt (35) situé de part et d'autre de ladite languette centrale (33). Le rotor porte-outils (3) présente donc un logement (6) permettant de recevoir les doigts (35) et la languette centrale (33). La figure 3 visualise également l'élément de liaison (20) traversant l'ouverture (34) laquelle est ménagée dans la languette centrale (33).

Par ailleurs la partie de liaison (30a) présente au moins une collerette (31) venant en butée contre le rotor porte-outils (3), lorsque ladite partie de liaison (30a) est complètement engagée dans le logement (6) correspondant. Ce dernier présente deux formes cylindriques complémentaires à la forme des doigts (35). L'association de ces formes complémentaires, combinée aux effets de stabilité obtenus par la collerette (31) contribuent à encaisser les contraintes exercées sur l'outil de travail (30) lors de l'utilisation de la machine. L'usure, à des endroits très localisés, est ainsi fortement diminuée.

D'autres combinaisons d'éléments ou de pièces de différents modes de réalisation conformes à l'invention, peuvent également s'envisager sans toutefois sortir du cadre de la présente invention. Ainsi, l'élément de liaison (20) peut convenir à l'outil de travail (30) ou à l'outil de travail (130). Il en est de même pour l'élément de liaison (120) ou (220).

Selon le mode de réalisation de la machine conforme à l'invention et représenté à la figure 4, le rotor porte-outils (103) présente un logement (106) pour recevoir la partie de liaison (130a) d'un outil de travail (130).

La languette centrale (133) de cet outil de travail (130) s'étend depuis l'un des doigts (135) jusqu'à l'autre doigt (135). Les doigts (135) sont situés de part et d'autre de la languette (133) et sont raccordés à celle-ci.

Le logement (106) présente avantageusement un dégagement de matière (106a ; 106b) complémentaire à la forme constituée par les deux doigts (135) et la languette centrale (133).

La partie de liaison (130a) présente dans ce cas de figure, une section transversale sensiblement plane se prolongeant vers des terminaisons d'épaisseur accrue et au moins partiellement arrondies ou circulaires.

La partie de liaison (130a) pénètre dans le logement (106) jusqu'à l'arrivée en butée de la collerette (131) contre le rotor porte-outils (103). Le maintien de l'outil de travail (130) sur le rotor porte-outils (103) est assuré par l'élément de liaison (20 ; 120 ; 220) traversant l'ouverture (134) ménagé dans la languette (133) d'une part et l'ouverture (134) d'au moins un autre outil de travail (130) d'autre part.

L'outil de travail (130) adapté à ce mode de réalisation est par exemple représenté plus en détail aux figures 8 à 10. La figure 9 montre par exemple la liaison entre la languette centrale (133) et les doigts (135). Ceci augmente la rigidité de la partie de liaison (130a).

La forme quasi-cylindrique des doigts (135) permet également de réduire le jeu mécanique et par conséquent l'usure desdits doigts (135) suite aux contacts avec les parois internes du logement (106).

En effet, la partie cylindrique et le cas échéant une terminaison arrondie (135a) des doigts (135) augmentent la surface de contact entre les outils de travail (130) et le rotor porte-outils (103). Cette surface de contact permet ainsi de répartir davantage les contraintes et les efforts exercés sur la partie de liaison (130a). Les efforts et les contraintes moins localisés évitent donc une usure prématurée ainsi que l'augmentation du jeu fonctionnel entre la partie de liaison (130a) et le rotor porte-outils (103).

Un autre avantage est obtenu avec la coopération entre la forme des doigts (135) et la collerette (131) venant en butée contre le rotor porte-outils (103). Un positionnement correct ainsi que la répartition optimale des contraintes ou efforts permettent d'augmenter la durée de vie des rotors porte-outils (103) et des outils de travail (130).

Selon un mode de réalisation additionnel de l'outil de travail (130), la collerette (131) peut être supprimée. Le positionnement de l'outil (130) est obtenu alors à l'aide de la languette (133) dont la partie extrême (133a) vient en butée contre un fond (106c) du logement (106). Le contact obtenu entre le fond (106c) et la partie extrême (133a) permet également d'encaisser les efforts auxquels est soumis l'outil de travail (130) durant le travail du sol. Les terminaisons arrondies (135a) peuvent également selon le cas venir en butée contre des parties correspondantes, et complémentaires au niveau de la forme, du logement (106a ; 106b). Un contact optimal, durant le travail, est alors assuré par les doigts (135) de forme sensiblement cylindrique.

Selon le mode de réalisation de l'outil, représenté aux figures 11, 12 et 13, les doigts (135) et la languette (133) forment une partie de liaison (130a) profilée et dépourvue de parties saillantes ou anguleuses. La languette (133) est une pièce raccordée de façon continue et progressive aux doigts (135) pour réaliser une seule pièce susceptible d'être intégrée dans le logement (106).

Selon une réalisation de l'outil de travail (30 ; 130) conforme à l'invention, la languette (33 ; 133) et le (les) doigt(s) (35 ; 135) présentent des axes longitudinaux sensiblement parallèles.

On peut ainsi définir un plan d'engagement dans les logements (6 ; 106) sensiblement orthogonal à l'axe de rotation (x - x').

Selon un autre mode de réalisation de l'outil de travail (30 ; 130) conforme à l'invention, les axes longitudinaux des doigts (35 ; 135) convergent vers l'axe longitudinal de la languette (33 ; 133). La partie de liaison (30a ; 130a) présente ainsi une configuration conique.

Dans l'un ou l'autre des exemples de réalisation de l'outil de travail (30 ; 130) conforme à l'invention, une section transversale de ladite partie de liaison (30a ; 130a) orthogonale à un axe longitudinal de la languette et passant par ladite languette (33 ; 133) et le (les) doigt(s) (35 ; 135), présente une première partie sensiblement rectangulaire et une (des) deuxième(s) partie(s) d'épaisseur accrue par rapport à ladite première partie et de forme au moins partiellement arrondie ou circulaire.

La partie extrême (133a) est destinée à venir en appui contre un organe de la machine, ou du rotor porte-outils (103). L'outil conforme à l'invention, et représenté à la figure 12 ou 13, montre également un rehaussement (134a) au voisinage de l'ouverture (134). Ce rehaussement (134a) est réalisé par exemple avec un surplus de matière obtenu par estampage et permet d'augmenter la solidité de la zone coopérant avec l'élément de liaison (120). Dans l'exemple de réalisation représenté aux figures 11, 12 et 13, la languette (133) présente une partie centrale dont l'épaisseur croît de façon continue et progressive selon un certain rayon de courbure vers les doigts (135), lesquels présentent par exemple un rayon de courbure nettement plus petit, comme cela est visible à la figure 12 notamment. Ce sont les parties arrondies des doigts (135) notamment qui présentent des zones d'appui étendues lorsque l'outil (130) est monté sur le rotor porte-outils (103).

Un autre avantage de la machine conforme à l'invention est lié à un démontage/remontage des outils de travail (30 ; 130) rapide. Les moyens de maintien desdits outils de travail (30 ; 130) sont en outre situés dans une zone facilement accessible. Il est ainsi inutile, selon le cas, de tourner le rotor porte-outils (3 ; 103) pour démonter l'un après l'autre les outils de travail (30 ; 130).

Comme visible sur les figures 4 et 5, les doigts (35 ; 135) et la languette (33, 133) d'un outil (30 ; 130) s'étendent dans un plan d'extension sensiblement orthogonal à l'axe (x-x') du rotor porte-outils (3 ; 103) correspondant.

En outre, les deux doigts (35 ; 135) d'un même outil de travail (30 ; 130) sont sensiblement parallèles entre eux. Lorsqu'ils sont montés sur leur rotor porte-outils (3 ; 103) correspondant, leur extrémité s'étend dans le voisinage de l'arbre (2) correspondant.

En ce qui concerne les broches (21 ; 121 ; 221) de l'élément de liaison (20 ; 120 ; 220), il est visible que celles-ci s'étendent également avantageusement sensiblement parallèlement entre elles. En outre, elles s'étendent sensiblement parallèlement à l'axe (x - x') du rotor porte-outils (3 ; 103) correspondant quand l'élément de liaison (20 ; 120 ; 220) est monté.

Avantageusement au moins une partie de chaque broche (21 ; 121 ; 221) traverse entièrement l'outil (30 ; 130) correspondant, lequel comporte l'ouverture (34 ; 134) à cet effet.

Un avantage supplémentaire est obtenu avec l'élément de liaison (20 ; 120 ; 220) et plus précisément par sa forme sensiblement en U.

L'organe porteur (21a ; 121a ; 221a) s'étend dans une zone facilement accessible. En outre, la préhension de cet organe porteur (21a ; 121a ; 221a) facilite le retrait de l'élément de liaison (20 ; 120 ; 220) et par conséquent le remplacement des outils de travail (30 ; 130). L'accessibilité et une préhension optimale de l'organe porteur (21a ; 121a ; 221a) permettent de démonter rapidement les outils de travail (30 ; 130) même en cas de grippage éventuel de l'élément de liaison (20 ; 120 ; 220) sur une autre pièce.

## Revendications

1. Outil (30 ; 130) pour machine de travail du sol, destiné à tourner autour d'un axe de rotation vertical (x - x') correspondant et comportant :
- une partie active de travail (30b ; 130b),
- une partie de liaison (30a ; 130a) sensiblement orthogonale à la partie active de travail (30b ; 130b) et destinée à positionner ledit outil (30 ; 130) sur la machine,
- au moins une ouverture (34 ; 134) ménagée dans la partie de liaison (30a ; 130a) et destinée à coopérer avec un moyen de maintien retenant ledit outil (30 ; 130) de travail sur la machine,
- ladite partie de liaison (30a ; 130a) comprenant une languette (33 ; 133) sensiblement plane et au moins un doigt (35 ; 135), ce dernier étant, avec ladite languette (33 ; 133), susceptible de s'engager dans au moins un logement (6 ; 106) prévu à cet effet sur la machine
***caractérisé en ce* qu'**une section transversale de la partie de liaison (30a ; 130a), orthogonale à un axe longitudinal de la languette (33 ; 133) et passant par ladite languette (33 ; 133) et le (les) doigt(s) (35 ; 135), présente une première partie sensiblement rectangulaire et une (des) deuxième(s) partie(s) d'épaisseur accrue par rapport à la première partie et de forme au moins partiellement arrondie ou circulaire, ladite première partie formant ladite languette (33 ; 133) et ladite (lesdites) deuxième(s) partie(s) formant le (les) doigt(s) (35 135).

2. Outil selon la revendication 1, ***caractérisé en ce* que** la languette (33 ; 133) est raccordée audit (auxdits) doigt(s) (35 ; 135).

3. Outil selon la revendication 2, ***caractérisé en ce* que** la section de la languette (133) s'élargit progressivement et de manière continue pour se raccorder au (aux) doigt(s) (135).

4. Outil selon l'une quelconque des revendications 1 à 3, ***caractérisé en ce* qu'**il comporte un doigt (35 ; 135) de part et d'autre de la languette (33 ; 133).

5. Outil selon la revendication 4, ***caractérisé en ce* que** la languette (33 ; 133) s'étend selon un plan d'extension sensiblement parallèle ou confondu avec le plan d'extension défini par les axes de symétrie longitudinaux des doigts (35 135).

6. Outil selon l'une quelconque des revendications 1 à 5, ***caractérisé en ce* que** ledit (l'un au moins desdits) doigt(s) (35 ; 135) présente une forme sensiblement cylindrique.

7. Outil selon l'une quelconque des revendications 1 à 6, ***caractérisé en ce* que** la languette (33 ; 133) et le (les) doigt(s) (35 ; 135) présentent des axes longitudinaux sensiblement parallèles.

8. Outil selon l'une quelconque des revendications 1 à 7, ***caractérisé en ce* que** l'ouverture (34 ; 134) est ménagée dans la languette (33 ; 133) selon une direction orthogonale à un plan d'extension de ladite languette (33 ; 133).

9. Outil selon l'une quelconque des revendications 1 à 8, ***caractérisé en ce* que** la partie de liaison (30a ; 130a) est pourvue d'au moins une collerette (31 ; 131) destinée à venir en butée contre une partie de la machine lors du montage de l'outil (30 ; 130) sur ladite machine.

10. Outil selon l'une quelconque des revendications 1 à 9, ***caractérisé en ce* qu'**il est destiné à être monté sur un rotor porte-outils (3 ; 103) de la machine, lequel est susceptible de tourner autour d'un axe (x - x') sensiblement vertical durant le travail.

11. Outil selon l'une quelconque des revendications 1 à 10, ***caractérisé en ce* que** la partie de liaison (30a ; 130a) s'étend sensiblement orthogonalement à l'axe (x - x') quand ledit outil est monté sur un rotor porte-outils (3 ; 103) correspondant.

12. Outil selon l'une quelconque des revendications 1 à 11, ***caractérisé en ce* que** la partie de liaison (30a ; 130a) est destinée à venir en butée sur un organe de la machine.

13. Outil selon la revendication 12, ***caractérisé en ce* que** la languette (33 ; 133) est destinée à venir en butée contre un organe de la machine.

## Claims

1. Tool (30; 130) for soil working machine, intended to rotate about a corresponding vertical axis of rotation (x - x') and comprising:
- an active working part (30b; 130b),
- a connecting part (30a; 130a) substantially orthogonal to the active working part (30b; 130b) and intended to position said work tool (30; 130) on the machine,
- at least one opening (34; 134) formed in the connecting part (30a; 130a) and intended to collaborate with a holding means holding said work tool (30; 130) on the machine,
- said connecting part (30a; 130a) comprising a substantially flat tongue (33; 133) and at least one finger (35; 135), the latter being, with said tongue (33; 133), capable of engaging in at least one housing (6; 106) provided on the machine for this purpose
***characterized in* that** a cross section of the connecting part (30a; 130a), orthogonal to a longitudinal axis of the tongue (33; 133) and passing through said tongue (33; 133) and the finger(s) (35; 135), has a substantially rectangular first part and one (or more) second part(s) of greater thickness than the first part and of at least partially rounded or circular shape, said first part forming said tongue (33; 133) and said second part(s) forming the finger(s) (35; 135).

2. Tool according to Claim 1, ***characterized in* that** the tongue (33; 133) is connected to said finger(s) (35; 135).

3. Tool according to Claim 2, ***characterized in* that** the cross section of the tongue (133) widens gradually and continuously to connect with the finger(s) (135).

4. Tool according to any one of Claims 1 to 3, ***characterized in* that** it comprises a finger (35; 135) on each side of the tongue (33; 133).

5. Tool according to Claim 4, ***characterized in* that** the tongue (33; 133) extends in a plane of extension that is substantially parallel to or coincident with the plane of extension defined by the longitudinal axes of symmetry of the fingers (35; 135).

6. Tool according to any one of Claims 1 to 5, ***characterized in* that** said (at least one of said) finger(s) (35; 135) has a substantially cylindrical shape.

7. Tool according to any one of Claims 1 to 6, ***characterized in* that** the tongue (33; 133) and the finger(s) (35; 135) have substantially parallel longitudinal axes.

8. Tool according to any one of Claims 1 to *7,* ***characterized in* that** the opening (34; 134) is made in the tongue (33; 133) in a direction orthogonal to a plane in which said tongue (33; 133) extends.

9. Tool according to any one of Claims 1 to 8, ***characterized in* that** the connecting part (30a; 130a) is equipped with at least one flange (31; 131) intended to come into abutment against one part of the machine when the work tool (30; 130) is being mounted on said machine.

10. Tool according to any one of Claims 1 to 9, ***characterized in* that** it is intended to be mounted on a tool-carrying rotor (3; 103) of the machine, which rotor is capable of rotating about a substantially vertical axis (x - x') during work.

11. Tool according to any one of Claims 1 to 10, ***characterized in* that** the connecting part (30a; 130a) extends substantially orthogonally to the axis (x - x') when said work tool is mounted on a corresponding tool-carrying rotor (3; 103).

12. Tool according to any one of Claims 1 to 11, ***characterized in* that** the connecting part (30a; 130a) is intended to come into abutment against an element of the machine.

13. Tool according to Claim 12, ***characterized in* that** the tongue (33; 133) is intended to come into abutment against an element of the machine.

## Patentansprüche

1. Werkzeug (30; 130) für eine Bodenbearbeitungsmaschine, das sich um eine entsprechende vertikale Drehachse (x-x') drehen soll und
- einen aktiven Arbeitsteil (30b; 130b),
- einen sich im wesentlichen senkrecht zum aktiven Arbeitsteil (30b; 130b) erstreckenden Verbindungsteil (30a; 130a) zur Positionierung des Werkzeugs (30; 130) an der Maschine,
- mindestens eine im Verbindungsteil (30a; 130a) ausgebildete Öffnung (34; 134), die mit einem das Arbeitswerkzeug (30; 130) an der Maschine festhaltenden Haltemittel zusammenwirken soll,
- wobei der Verbindungsteil (30a; 130a) eine im wesentlichen ebene Zunge (33; 133) und mindestens einen Finger (35; 135) umfaßt, der mit der Zunge (33; 133) in mindestens einer Aufnahme (6; 106) in Eingriff gelangen kann, die dazu an der Maschine vorgesehen ist,
umfaßt, ***dadurch gekennzeichnet,* daß** ein Querschnitt des Verbindungsteils (30a; 130a), der sich senkrecht zur einer Längsachse der Zunge (33; 133) erstreckt und durch die Zunge (33; 133) und den (die) Finger (35; 135) verläuft, einen ersten im wesentlichen rechteckigen Teil und einen zweiten Teil bzw. zweite Teile aufweist, der bzw. die dicker ist bzw. sind als der erste Teil und eine zumindest teilweise abgerundete oder kreisrunde Form aufweist bzw. aufweisen, wobei der erste Teil die Zunge (33; 133) bildet und der zweite Teil bzw. die zweiten Teile den (die) Finger (35; 135) bildet bzw. bilden.

2. Werkzeug nach Anspruch 1, ***dadurch gekennzeichnet,* daß** die Zunge (33; 133) mit dem (den) Finger(n) (35; 135) verbunden ist.

3. Werkzeug nach Anspruch 2, ***dadurch gekennzeichnet,* daß** sich der Querschnitt der Zunge (133) zum Anschluß an den bzw. die Finger (135) allmählich und kontinuierlich verbreitet.

4. Werkzeug nach irgend einem der Ansprüche 1 bis 3, ***dadurch gekennzeichnet,* daß** es auf beiden Seiten der Zunge (33; 133) einen Finger (35; 135) aufweist.

5. Werkzeug nach Anspruch 4, ***dadurch gekennzeichnet,* daß** sich die Zunge (33; 133) in einer Erstreckungsebene erstreckt, die im wesentlichen parallel zu der durch die in Längsrichtung verlaufenden Symmetrieachsen der Finger (35; 135) definierten Erstreckungsebene verläuft oder damit zusammenfällt.

6. Werkzeug nach irgend einem der Ansprüche 1 bis 5, ***dadurch gekennzeichnet,* daß** der (mindestens einer der) Finger (35; 135) eine im wesentlichen zylindrische Form aufweist.

7. Werkzeug nach irgend einem der Ansprüche 1 bis 6, ***dadurch gekennzeichnet,* daß** die Zunge (33; 133) und der (die) Finger (35; 135) im wesentlichen parallele Längsachsen aufweisen.

8. Werkzeug nach irgend einem der Ansprüche 1 bis 7, ***dadurch gekennzeichnet,* daß** die Öffnung (34; 134) in der Zunge (33; 133) in einer senkrecht zu einer Erstreckungsebene der Zunge (33; 133) verlaufenden Richtung ausgebildet ist.

9. Werkzeug nach irgend einem der Ansprüche 1 bis 8, ***dadurch gekennzeichnet,* daß** der Verbindungsteil (30a; 130a) mit mindestens einem Flansch (31; 131) versehen ist, der bei der Montage des Werkzeugs (30; 130) an der Maschine an einem Teil der Maschine zur Anlage kommen soll.

10. Werkzeug nach irgend einem der Ansprüche 1 bis 9, ***dadurch gekennzeichnet,* daß** es an einem Werkzeugtragrotor (3; 103) der Maschine angebracht werden soll, der sich im Betrieb im wesentlichen vertikal um eine Achse (x-x') drehen kann.

11. Werkzeug nach irgend einem der Ansprüche 1 bis 10, ***dadurch gekennzeichnet,* daß** sich der Verbindungsteil (30a; 130a) im wesentlichen senkrecht zur Achse (x-x') erstreckt, wenn das Werkzeug an einem entsprechenden Werkzeugtragrotor (3; 103) angebracht ist.

12. Werkzeug nach irgend einem der Ansprüche 1 bis 11, ***dadurch gekennzeichnet,* daß** der Verbindungsteil (30a; 130a) an einem Element der Maschine zur Anlage kommen soll.

13. Werkzeug nach Anspruch 12, ***dadurch gekennzeichnet,* daß** die Zunge (33; 133) an einem Element der Maschine zur Anlage kommen soll.
